# EUROPÄISCHE PATENTSCHRIFT

(11) **EP 0 741 849 B1**
(45) Veröffentlichungstag und Bekanntmachung des Hinweises auf die Patenterteilung: **18.11.1998**
(21) Anmeldenummer: 95907594.6
(22) Anmeldetag: 24.01.1995
(51) Int. Cl.: F23R 3/04

(54) **BRENNKAMMER FÜR EINE GASTURBINE**
COMBUSTION CHAMBER FOR A GAS TURBINE
CHAMBRE DE COMBUSTION POUR TURBINE A GAZ

(30) Priorität: 24.01.1994 EP 94100988; 24.01.1994 EP 94100989
(43) Veröffentlichungstag der Anmeldung: 13.11.1996
(73) Patentinhaber: SIEMENS AKTIENGESELLSCHAFT, 80333 München (DE)
(72) Erfinder: MAGHON, Helmut, D-45481 Mülheim/Ruhr (DE)
(86) Internationale Anmeldenummer: EP9500245
(87) Internationale Veröffentlichungsnummer: WO9520130

(56) Entgegenhaltungen:
- FR-A- 2 345 592
- GB-A- 816 878
- US-A- 3 433 015
- US-A- 3 460 345
- US-A- 4 052 844

## Beschreibung

Die Erfindung betrifft eine Brennkammer für eine Gasturbine, welche entlang einer Achse von einem aus einem Verdichterteil zu einem Turbinenteil strömenden, an einem Eintritt eintretenden und einen Drall aufweisenden Strom verdichteter Luft durchströmbar ist, mit einem an dem Eintritt angeordneten Ringkanal und einem darin angeordneten Einströmteil zur Abtrennung eines Teilstroms aus dem Strom, welcher Einströmteil mit Pilotbrennern zur Stabilisierung einer Verbrennung in der Brennkammer kommuniziert.

Eine solche Brennkammer geht hervor aus dem US-Patent 5,207,064.

Die Erfindung bezieht sich insbesondere auf die Bereitstellung eines Teilstroms aus dem Strom, um diesen für weitere Zwecke zum Betrieb der Gasturbine anzuwenden. Eine bekannte Anwendung für einen solchen Teilstrom ist die Kühlung des Turbinenteils sowie die Kühlung einer zwischen dem Verdichterteil und dem Turbinenteil angeordneten und von dem Strom durchsetzten Brennkammer. Solches ist in einer herkömmlichen stationären Gasturbine für die Erzeugung von Elektrizität mit einer Leistung von 100 MW und darüber notwendig, da der Strom vor dem Eintritt in den Turbinenteil durch die Verbrennung eines Brennstoffes auf eine Temperatur bis über 1000° C aufgeheizt wird und somit Strukturteile des Turbinenteils und anderer Komponenten der Gasturbine einer großen thermischen Belastung aussetzt. Eine solche thermische Belastung ist unter Umständen nicht ohne Kühlung verkraftbar. Bevorzugtermaßen wird Luft, die dem Strom entnommen wird, als Kühlmittel eingesetzt. Es ist auch bereits vorgeschlagen worden, diese Luft mit anderen Stoffen, insbesondere mit Wasserdampf, zu versetzen.

Da die Systeme zur Führung der zur Kühlung abgezweigten Luft oftmals verzweigt sind und der Druckverlust, den der in dem Strom zur Verbrennung gelangende Hauptanteil der verdichteten Luft in einer Brennkammer erleidet, üblicherweise gering gehalten wird aus Gründen der Gewährleistung eines hohen thermodynamischen Wirkungsgrades, ist eine Möglichkeit vorzusehen, den statischen Druck, unter dem die abgezweigte Luft steht, zu erhöhen. Hierfür kann selbstverständlich ein Gebläse oder ein Kompressor eingesetzt werden, was allerdings einen hohen apparativen Aufwand und einen Verlust an Netto-Wirkungsgrad bedeutet, da die Energie zum Betrieb eines Gebläses oder Kompressor letztendlich von der Gasturbine selbst aufgebracht werden muß und somit nicht mehr zur Einspeisung in ein Energieversorgungsnetz zur Verfügung steht. Grundsätzlich ist es daher wünschenswert, den Einsatz eines Gebläses oder Kompressors zu vermeiden.

Allgemeine Hinweise zur Ausgestaltung von Brennern und Brennkammern für Gasturbinen nebst Heißgaskanälen, die solche Brennkammern mit Turbinenteilen verbinden, gehen hervor aus der EP 0 193 838 B1, dem US-Patent Re. 33896, der EP 0 224 817 B1, dem US-Patent 4 749 029, der EP 0 483 554 A1 und der EP 0 489 193 A1. Letztgenannte Schrift betrifft eine Brennkammer für eine Gasturbine in der Form einer sogenannten Ringbrennkammer und gibt auch Hinweise zur Kühlung von Strukturteilen dieser Ringbrennkammer.

Die Kühlung von Teilen eines Rotors einer Gasturbine mittels eines Teilstroms von Luft ist in der EP 0447886 Al beschrieben.

Aus dem US-Patent 5207064 geht eine Anordnung mit einer Brennkammer für eine Gasturbine hervor. Die Anordnung umfaßt die eigentliche Brennkammer sowie Einrichtungen, die der Brennkammer zugeordnet sind und die einem Strom verdichteter Luft, der die Brennkammer durchsetzt, Teilströme entziehen. Diese Teilströme werden zum Teil sogenannten Pilotbrennern zugeführt, die in jedem dieser Teilströme einen kleinen Anteil des insgesamt zugeführten Brennstoffs verbrennen und eine an anderen Stelle in dem Strom stattfindende Verbrennung, für die der überwiegende Anteil des Brennstoffs zugeführt wird, stabilisieren. Andere, an anderer Stelle abgezapfte Teilströme dienen der Kühlung der Brennkammer. Die Teilströme werden jeweils in der Nähe derjenigen Stellen dem Strom entnommen, wo sie bestimmungsgemäß eingesetzt werden; für die Pilotbrenner werden Teilströme im Einströmbereich der Anordnung entnommen, zur Kühlung einer Außenwand der Brennkammer erfolgt die Entnahme in der Nähe der Außenwand, und zur Kühlung der Innenwand der Brennkammer erfolgt die Entnahme der Teilströme in der Nähe dieser Innenwand. Die Brennkammer selbst ist kreisringförmig ausgestaltet und umringt einen Rotor der Gasturbine, welcher den der Brennkammer nachgeschalteten Turbinenteil mit dem der Brennkammer vorgeschalteten Verdichterteil verbindet.

Aufgabe der Erfindung ist die Angabe einer Brennkammer der eingangs geschilderten Art, in der einfach gestaltete und wenig aufwendige Mittel zur Entnahme von Teilströmen vorgesehen sind und die zu einer möglichst verlustfreien Führung des Stroms weitgehend frei von zusätzlichen Einbauten bleiben kann.

Zur Lösung dieser Angabe angegeben wird eine Brennkammer für eine Gasturbine, welche entlang einer Achse von einem aus einem Verdichterteil zu einem Turbinenteil strömenden, an einem Eintritt eintretenden und einen Drall aufweisenden Strom verdichteter Luft durchströmbar ist, mit einem an dem Eintritt angeordneten Ringkanal und einem darin angeordneten Einströmteil zur Abtrennung eines Teilstroms aus dem Strom, welcher Einströmteil mit Pilotbrennern zur Stabilisierung einer Verbrennung in der Brennkammer kommuniziert, wobei der Einströmteil Mittel aufweist, um dem Teilstrom seinen Drall zu entziehen, und zusätzlich mit Kühlkanälen zur Kühlung der Brennkammer kommuniziert.

Im Sinne der Erfindung sind die vielen verschiedenen Mittel zur Abtrennung von Teilströmen aus dem Strom zusammengefaßt in einem einzigen, am Eintritt der Brennkammer vorgesehenen Einströmteil, in dem durch Entzug des Dralls und damit verbundene Verzögerung ein unter erhöhtem statischem Druck stehender Teilstrom bereitgestellt wird, der über entsprechende Einrichtungen mit den Kühlkanälen zur Kühlung der Brennkammer sowie den Pilotbrennern zur Stabilisierung des Verbrennungsprozesses in der Brennkammer kommuniziert. Im übrigen kann die Brennkammer frei bleiben von Einbauten, außer denjenigen Einbauten, die zur allfällig notwendigen Zuführung von Brennstoff zu dem Strom erforderlich sind. Im übrigen kann sich der Strom weitgehend frei durch die Brennkammer bewegen, so daß thermodynamische Verluste weitgehend vermieden sind.

Es versteht sich, daß der Abbau des Dralls des erfindungsgemäß abgezweigten Teilstroms nicht durch Dissipation, also durch Reibung, erfolgt, sondern unter weitgehender Vermeidung von Turbulenzen durch Umlenkung, um eine möglichst große Erhöhung des statischen Drucks in dem Teilstrom zu erreichen und damit in einen möglichst umfaßenden Genuß der sich daraus ergebenden Vorteile zu gelangen. Bevorzugtermaßen ist der Teilstrom ein einen kreisringförmigen Teilbereich des Ringkanals durchsetzender Teil des Stromes, da auf diese Weise sichergestellt ist, daß bei der Abtrennung kein Drall verlorengeht. Die Verbindung des entsprechend gestalteten Einströmteils mit den Kühlkanälen erfolgt vorzugsweise durch entsprechende Röhren.

Die Mittel zur Entziehung des Dralls aus dem Teilstrom sind vorzugsweise entsprechend gestaltete und angeordnete Leitschaufeln.

Weiterhin bevorzugt sind zur Zuführung von Brennstoff zu dem Strom Rippen vorgesehen, die so angeordnet sind, daß Brennstoff, der durch sie dem Strom zugeführt wird, sich an Pilotflammen, die von den Pilotbrennern geliefert werden, entzündet. Zur Zuführung von Brennstoff sowohl zu den Pilotbrennern als auch zu den Rippen ist ein entsprechendes Brennstoffleitungssystem vorgesehen. Im Rahmen dieser Ausgestaltung sind die Pilotbrenner vorzugsweise in einer Anzahl vorhanden, welche einer halben oder ganzen Anzahl entspricht, mit der die Rippen vorhanden sind. Derart ergibt sich eine Zuordnung je eines Pilotbrenners zu je einer Rippe bzw. je eines Pilotbrenners zu zwei Rippen, die durch entsprechende Positionierung des Pilotbrenners und der Rippe bzw. der Rippen relativ zueinander derart ausgenutzt werden kann, daß sich in dem Strom im Bereich der von dem Pilotbrenner gelieferten Pilotflamme eine besonders hohe Konzentration von Brennstoff ergibt, was zu einer erhöhten Zündbereitschaft des Brennstoff-Luft-Gemisches und damit zu einer Stabilisierung der Verbrennung beiträgt.

Eine zusätzliche Weiterbildung der soeben beschriebenen Ausgestaltung ist dadurch ausgezeichnet, daß die Brennkammer an einem Turbinenteil angeschlossen ist, welcher durch einen Kranz von Leitschaufeln angeströmt werden muß, wobei die Anzahl der Rippen gleich der Anzahl von Leitschaufeln ist. Diese Ausgestaltung erlaubt es bei geeigneter Positionierung der Rippen und der Leitschaufeln relativ zueinander, daß lokale Maxima der Verteilung der Temperatur in dem Strom, die sich aufgrund von Inhomogenitäten bei der Zuführung von Brennstoff zu dem Strom ergeben, jeweils zwischen zwei Leitschaufeln zu liegen kommen, so daß die Temperatur, mit der eine Leitschaufel beaufschlagt wird, deutlich unterhalb der maximalen, in dem Strom auftretenden Temperatur liegt. Dergestalt kann bei gezielt inhomogener Zuführung von Brennstoff in einer entsprechend eingerichteten Anordnung eine Anhebung der thermodynamisch maßgeblichen mittleren Temperatur des Stroms durch gezielte Anhebung des Maximums der Verteilung der Temperatur erreicht werden, ohne daß sich die thermische Belastung der Leitschaufeln vergrößert. So wird erfindungsgemäß eine Möglichkeit zur Erhöhung des thermodynamischen Wirkungsgrades einer Gasturbine erschlossen.

Die mit Rippen zur Zuführung von Brennstoff versehene Brennkammer ist vorzugsweise frei von weiteren Einbauten, damit der Strom die Brennkammer weitgehend störungsfrei durchströmen kann. Diese Brennkammer vermeidet in besonderer Weise thermodynamische Verluste, wie sie sich an Turbulenzen und/oder an aufwendigen Einbauten ergeben konnten, und ist somit im Hinblick auf die Erzielung eines hohen Wirkungsgrades von großem Vorteil.

Ausführungsbeispiele der Erfindung gehen aus der Zeichnung hervor. In jeder Figur der Zeichnung sind nur diejenigen Elemente der Ausführungsbeispiele gezeichnet, die für die Erläuterung von Bedeutung sind. Dabei tragen einander entsprechende Elemente gleiche Bezugszeichen. Die Zeichnung ist teilweise schematisiert und/oder leicht verzerrt ausgeführt und ist insbesondere nicht als maßstabgerechte Wiedergabe einer konkreten Ausführungsform anzusehen. Im einzelnen zeigen:
- FIG 1, FIG 2 und FIG 3: Ansichten einer Brennkammer in einer Gasturbine;
- FIG 4: eine Ansicht einer besonders bevorzugten Ausführungsform der Brennkammer.

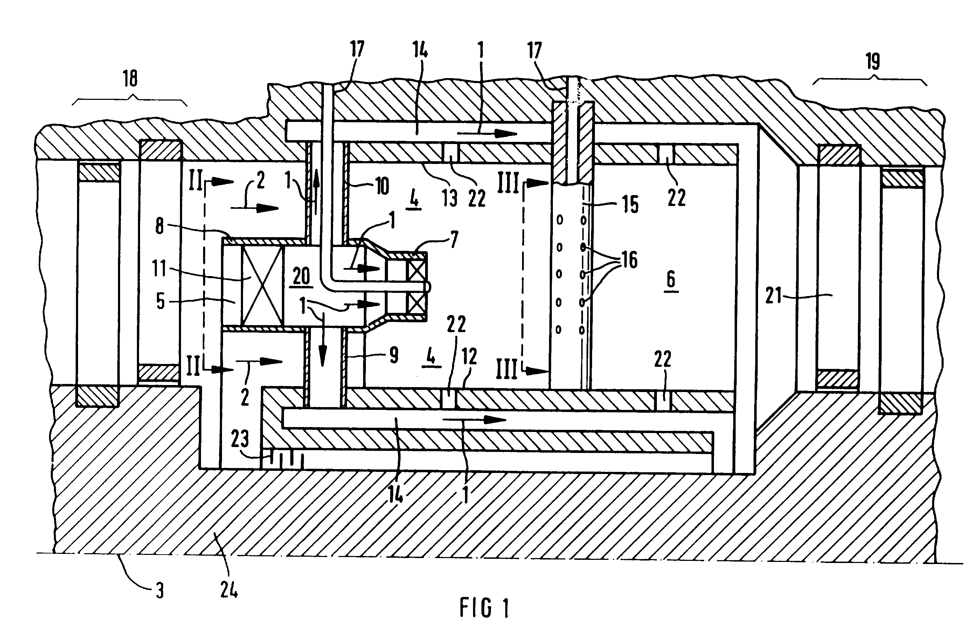

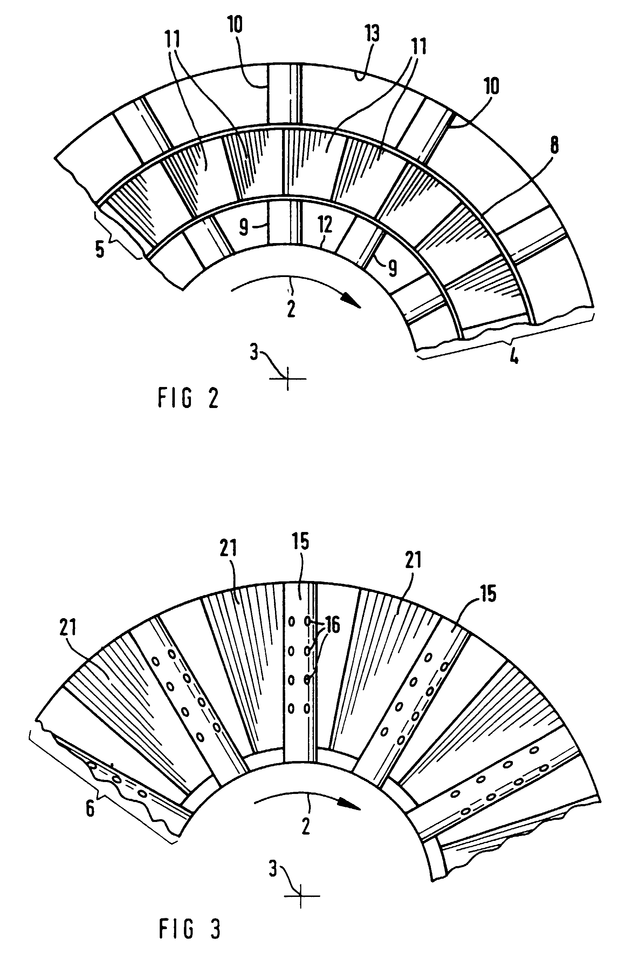

Figur 1 zeigt einen Ausschnitt aus einer Gasturbine, nämlich einen Teil des Verdichterteils 18, einen Teil des Turbinenteils 19 sowie dazwischenliegend eine Brennkammer 6 in Form einer Ringbrennkammer. Die Anordnung ist axialsymetrisch bezüglich der Achse 3. Der Verdichterteil 18 liefert einen Strom 2 verdichteten Gases, nämlich verdichteter Luft, welcher sich schraubenförmig entlang der Achse 3 fortpflanzt und dementsprechend bezüglich dieser Achse 3 einen Drall aufweist. In den Figuren 2 und 3 ist dies angedeutet. Der Strom 2 tritt zum größten Teil in die Brennkammer 6 ein, wobei ihm in einem Ringkanal 4 am Eintritt der Brennkammer 6 ein Teilstrom 1 entzogen wird. Dieser Teilstrom 1 dringt in einem kreisringförmigen Teilbereich 5 des Ringkanals 4 in ein Einströmteil 8 ein und trifft dort zunächst auf Leitschaufeln 11, welche ihm den Drall im wesentlichen entziehen. Hinter den Leitschaufeln 11 tritt der Teilstrom 1 im wesentlichen parallel zur Achse 3 in einen Sammelraum 20 ein und wird von dort mehreren Verwendungen zugeführt. Durch eine nach außen gerichtete Röhre 10 gelangt ein Teil des Teilstroms 1 in einen Kühlkanal 14 hinter die Außenseite 13 des Ringkanals 4 und kann somit die Brennkammer 6 kühlen; dabei gelangt er teils durch Kühlluftbohrungen 22 wieder in die Brennkammer 6, teils vermischt er sich hinter der Brennkammer 6 wieder mit dem Strom 2. Ein anderer Teil des Teilstroms 1 dringt durch eine nach innen gerichtete Röhre 9 hinter die Innenseite 12 des Ringkanals 4 vor und gelangt dort ebenfalls in einen Kühlkanal 14, wo er die Brennkammer 6 kühlt. Hinter der Brennkammer 6 gelangt er wiederum teilweise zu dem Strom 2; andere Teile gelangen durch an der Innenseite 12 vorhandene Kühlluftbohrungen 22 direkt in die Brennkammer 6. Ein weiterer Teil des Teilstroms 1 gelangt zu einem Pilotbrenner 7 und wird dort mit Brennstoff versetzt, welcher über ein Brennstoffleitungssystem 17 zugeführt wird. Dieser Pilotbrenner 7 dient zu einer gewissen vorbereitenden Aufheizung des Stroms 2 und stabilisiert die Verbrennung in der Brennkammer 6, welche den Hauptteil der dem Strom 2 zuzuführenden Wärme liefert. Die Verbrennung in der Brennkammer 6 geschieht durch Brennstoff, welcher über das Brennstoffleitungssystem 17 einer in die Brennkammer 6 eingesetzten Rippe 15 zugestellt wird, von wo er durch Düsen 16 in den Strom 2 gelangt. Die Verbrennung erfolgt in der Brennkammer 6 unter Beibehaltung des Dralls des Stroms 2, woraus verschiedene Vorteile im Hinblick auf den thermodynamischen Wirkungsgrad der Gasturbine resultieren. Der Turbinenteil 19 hat an seinem der Brennkammer 6 zugewandten Ende feststehende Leitschaufeln 21, welche stets zu den thermisch am höchsten belasteten Bauteilen der Gasturbine zählen und in der Praxis vielfach ebenso wie die Brennkammer 6 einer Kühlung bedürfen. Auch hierfür kann ein aus dem Strom 2 abgeteilter Teilstrom 1 dienen; von einer entsprechenden Darstellung in Figur 1 wurde aus Gründen der Übersicht abgesehen. Für die Ausbildung von Kühlsystemen für Leitschaufeln 21 und andere Komponenten des Turbinenteils 19 sei auf die zitierten Dokumente des Standes der Technik sowie das einschlägige Fachwissen verwiesen. Die Brennkammer 6 umringt den Rotor 24 der Gasturbine. Zwischen der Brennkammer 6 und dem Rotor 24 befindet sich eine Dichtungsanordnung 23, z.B. eine Labyrinthdichtung, die sicherstellt, daß der Strom 2 vollständig zur Brennkammer 6 gelangt.

Figur 2 zeigt, wie durch die Linie II-II in Figur 1 angedeutet, eine Frontansicht des Einströmteils 8. Der Drall des Stroms 2 ist durch den gebogenen Pfeil dargestellt. Die Achse 3 erscheint als Kreuz. Deutlich erkennbar ist, daß der Einströmteil 8 einen kreisringförmigen Teilbereich 5 des Ringkanals 4 erfaßt. Erkennbar sind auch die Leitschaufeln 11, welche so ausgerichtet sind, daß sie den Drall des in das Einströmteil 8 gelangten Teilstroms 1 zur Erhöhung des statischen Drucks verringern, bevorzugtermaßen weitgehend beseitigen. Erkennbar sind auch die nach innen bzw. nach außen gerichteten Röhren 9 und 10, durch die Teile des Teilstroms 1 zu ihren jeweiligen Bestimmungen gelangen, insbesondere zu Kühlkanälen 14 für die Brennkammer 6, wie bereits ausgeführt.

Figur 3 zeigt, entsprechend der Linie III-III in Figur 1, einen Querschnitt durch die Brennkammer 6 senkrecht zur Achse 3. Auch hier symbolisiert der gebogene Pfeil den Drall des Stromes 2. Erkennbar sind die Rippen 15 mit Düsen 16 sowie die Leitschaufeln 21, die bereits zu dem Turbinenteil 19 gehören. Anzahl und Anordnung der Rippen 15 und Leitschaufeln 21 sind aufeinander abgestimmt, um die thermische Belastung der Leitschaufeln 21 durch den Strom 2, welcher aufgrund der gewählten Geometrie der Rippen 15 ungleichmäßig erhitzt wird, gering zu halten.

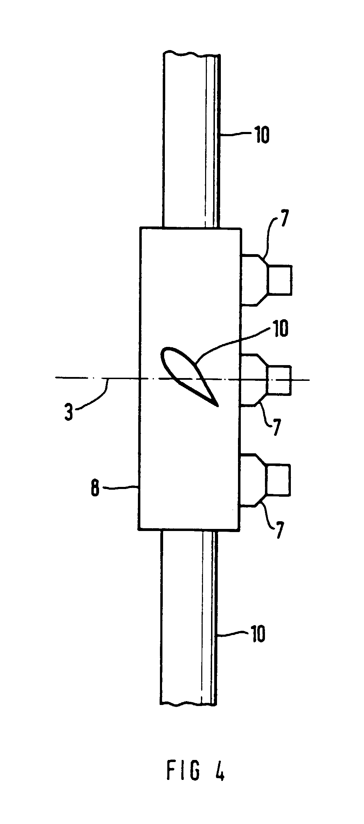

Figur 4 zeigt eine Ansicht des Einströmteils 8 nebst nach außen gerichteten Röhren 10 sowie Pilotbrennern 7 in einer Ansicht senkrecht zur Achse 3. Deutlich erkennbar ist, daß jede Röhre 10 ein Profil mit abgeflachtem Querschnitt hat; das Profil ist dabei so gerichtet, daß es dem Strom 2, welcher sich schraubenförmig um die Achse 3 bewegt, möglichst wenig Widerstand entgegensetzt.

Die Erfindung betrifft eine Brennkammer für eine Gasturbine, welche im Hinblick auf eine möglichst störungsfreie und verlustarme Führung des sie durchsetzenden Stromes verdichteter Luft ausgelegt ist und die die Abzweigung eines Teilstroms von dem Strom ermöglicht, der so beeinflußt wird, daß er sich für vielerlei Zwecke, insbesondere für Kühl zwecke und für Stabilisierungszwecke, hervorragend eignet.

## Patentansprüche

1. Brennkammer (6) für eine Gasturbine (6, 18, 19), welche entlang einer Achse (3) von einem aus einem Verdichterteil (18) zu einem Turbinenteil (19) strömenden, an einem Eintritt eintretenden und einen Drall aufweisenden Strom (2) verdichteter Luft durchströmbar ist, mit einem an dem Eintritt angeordneten Ringkanal (4) und einem darin angeordneten Einströmteil (8) zur Abtrennung eines Teilstroms (1) aus dem Strom (2), welcher Einströmteil (8) mit Pilotbrennern (7) zur Stabilisierung einer Verbrennung in der Brennkammer (6) kommuniziert,
**dadurch gekennzeichnet,** daß der Einströmteil (8) Mittel (11) aufweist, um dem Teilstrom (1) seinen Drall zu entziehen, und zusätzlich mit Kühlkanälen (14) zur Kühlung der Brennkammer (6) kommuniziert.

2. Brennkammer (6) nach Anspruch 1, bei der der Einströmteil (8) sich über einen kreisringförmigen Teilbereich (5) des Ringkanals (4) erstreckt und durch Röhren (9,10) mit den Kühlkanälen (14) verbunden ist.

3. Brennkammer nach Anspruch 1 oder 2, bei der die Mittel (11) zur Entziehung des Dralls aus dem Teilstrom (1) Leitschaufeln (11) sind.

4. Brennkammer (6) nach einem der vorhergehenden Ansprüche, welche Rippen (15) zur Zuführung von Brennstoff zu dem Strom (2), wobei der Brennstoff an Pilotflammen, die von den Pilotbrennern (7) geliefert werden, entzündet und verbrannt wird, sowie ein Brennstoffleitungssystem (17) zur Zuführung von Brennstoff sowohl zu den Pilotbrennern (7) als auch zu den Rippen (15) hat.

5. Brennkammer nach Anspruch 4, bei der die Pilotbrenner (7) in einer Anzahl vorhanden sind, welche einer halben oder ganzen Anzahl entspricht, mit der die Rippen (15) vorhanden sind.

6. Brennkammer (6) nach Anspruch 5, die an einen Turbinenteil (19) angeschlossen ist, welcher durch einen Kranz von Leitschaufeln (21) angeströmt werden muß, wobei die Anzahl der Rippen (15) gleich einer Anzahl der Leitschaufeln (21) ist.

7. Brennkammer (6) nach einem der Ansprüche 4 bis 6, in welcher hinter dem Ringkanal (4) nur die Rippen (15) eingebaut sind.

## Claims

1. Combustion chamber (6) for a gas turbine (6, 18, 19), through which a flow (2) of compressed air can pass which flows along an axis (3) from a compresscr part (18) to a turbine part (19), enters at an inlet and has a swirl, having an annular passage (4) arranged at the inlet and an inflow part (8) arranged therein for separating a partial flow (1) from the flow (2), which inflow part (8) communicates with pilot burners (7) for stabilizing combustion in the combustion chamber (6), characterized in that the inflow part (8) has means (11) in order to remove the swirl from the partial flow (1), and, in addition, communicates with cooling passages (14) for cooling the combustion chamber (6).

2. Combustion chamber (6) according to Claim 1, in which the inflow part (8) extends over a ring-shaped section (5) of the annular passage (4) and is connected by tubes (9, 10) to the cooling passages (14).

3. Combustion chamber according to Claim 1 or 2, in which the means (11) for removing the swirl from the partial flow (1) are guide blades (11).

4. Combustion chamber (6) according to one of the preceding claims, which has ribs (15) for supplying fuel to the flow (2), the fuel being ignited and burnt at pilot flames delivered by the pilot burners (7), as well as a fuel-line system (17) for supplying fuel to both the pilot burners (7) and the ribs (15).

5. Combustion chamber according to Claim 4, in which the number of pilot burners (7) corresponds to half the number of ribs (15) or the entire number of ribs (15).

6. Combustion chamber (6) according to Claim 5, which is attached to a turbine part (19) which has to be subjected to flow through a rim of guide blades (21), the number of ribs (15) being equal to the number of guide blades (21).

7. Combustion chamber (6) according to one of Claims 4 to 6, in which only the ribs (15) are installed behind the annular passage (4).

## Revendications

1. Chambre de combustion (6) pour une turbine à gaz (6, 18, 19) pouvant être traversée, suivant un axe (3), par un écoulement (2) d'air comprimé qui circule d'une partie de compresseur (18) vers une partie de turbine (19), qui y pénètre par une entrée et qui est animé d'un mouvement de rotation, comprenant un canal annulaire (4) disposé à l'entrée et, à l'intérieur de celui-ci, une partie d'admission (8) pour séparer un écoulement partiel (1) de l'écoulement (2), ladite partie d'admission (8) communiquant avec des brûleurs pilotes (7) pour stabiliser la combustion dans la chambre de combustion (6), caractérisée en ce que la partie d'admission (8) comporte des moyens (11) pour supprimer le mouvement de rotation de l'écoulement partiel (1) et, en outre, pour communiquer avec des canaux de refroidissement (14) pour refroidir la chambre de combustion (6).

2. Chambre de combustion (6) selon la revendication 1, dans laquelle la partie d'admission (8) s'étend sur une zone partielle annulaire (5) du canal annulaire (4) et est reliée par des tubes (9, 10) aux canaux de refroidissement (14).

3. Chambre de combustion selon la revendication 1 ou 2, caractérisée en ce que les moyens (11) pour supprimer le mouvement de rotation de l'écoulement partiel (1) sont des aubes fixes (11).

4. Chambre de combustion (6) selon une des revendications précédentes, qui comporte des nervures (15) pour amener le carburant à l'écoulement (2), le carburant étant enflammé et brûlé au contact de flammes pilotes générées par les brûleurs pilotes (7), ainsi qu'un système de conduite de carburant (17) pour amener du carburant aussi bien aux brûleurs pilotes (7) qu'aux nervures (15).

5. Chambre de combustion selon la revendication 4, caractérisée en ce que les brûleurs pilotes (7) sont prévus en nombre égal à la moitié ou à la totalité des nervures (15).

6. Chambre de combustion (6) selon la revendication 5, qui est reliée à une partie de turbine (19), laquelle n'est accessible par l'écoulement qu'à travers une couronne d'aubes fixes (21), le nombre de nervures (15) étant égal à celui des aubes fixes (21).

7. Chambre de combustion (6) selon l'une des revendications 4 à 6, dans laquelle seules les nervures (15) sont implantées en aval du canal annulaire (4).
